# EUROPEAN PATENT APPLICATION

(11) **EP 4 760 213 A1**
(43) Date of publication of application: **17.06.2026**
(21) Application number: 25219782.7
(22) Date of filing: 01.12.2025
(51) Int. Cl.: G01D 5/245

(54) **WAVEFORM MEASURING INSTRUMENT, MEASUREMENT METHOD, AND MEASUREMENT PROGRAM**

(30) Priority: 11.12.2024 JP 2024217113
(71) Applicant: Yokogawa Test & Measurement Corporation, Hachioji-shi, Tokyo 192-8566 (JP)
(72) Inventor: NAKAYAMA, Etsuro, Hachioji-shi, Tokyo, 192-8566 (JP)
(74) Representative: Stöckeler, Ferdinand

(57) **Abstract**

A waveform measuring instrument (1) converts a count signal outputted by an encoder (10) into a rotation angle. The waveform measuring instrument (1) includes a zero position determination circuit (114) configured to generate a set signal based on a Z-phase signal having a pulse width over a period including a plurality of zero position detection timings based on the count signal, and a counter (107) configured to increase or decrease the rotation angle based on the count signal, and set a count to zero when the rotation angle is increased and to a maximum value when the rotation angle is decreased, based on the set signal. The zero position determination circuit (114) is configured to output the set signal when a predetermined number of the zero position detection timings corresponding to forward rotation or reverse rotation occurs during a HI period of the Z-phase signal.

## Description

### TECHNICAL FIELD

The present disclosure relates to a waveform measuring instrument, a measurement method, and a measurement program for measuring a waveform obtained by converting a signal from a rotary encoder into an angle.

### BACKGROUND

As described in Patent Literature (PTL) 1, an encoder that determines the origin by storing the contact position of a stopper is known.

### CITATION LIST

### Patent Literature

PTL 1: JP 2017-111026 A

### SUMMARY

An encoder attached to a motor may utilize the signal of an excitation position sensor of the motor to determine the angular origin, i.e., the zero position. If the pulse width of the signal used to determine the angular zero position is long, the angular zero position may be determined at different angles when rotating in the forward direction and when rotating in the reverse direction. It is necessary to determine the angular zero position with high accuracy regardless of the rotation direction.

It would be helpful to provide a waveform measuring instrument, a measurement method, and a measurement program that can determine the angular zero position with high accuracy regardless of the rotation direction.

(1) A waveform measuring instrument according to several embodiments converts a count signal outputted by an encoder into a rotation angle. The waveform measuring instrument includes a zero position determination circuit configured to generate a set signal based on a Z-phase signal having a pulse width over a period including a plurality of zero position detection timings based on the count signal, and a counter configured to increase or decrease the rotation angle based on the count signal, and set a count to zero when the rotation angle is increased and to a maximum value when the rotation angle is decreased, based on the set signal. The zero position determination circuit is configured to output the set signal when a predetermined number of the zero position detection timings corresponding to forward rotation or reverse rotation occurs during a HI period of the Z-phase signal.

In this way, the timing for resetting the rotation angle to zero during forward rotation and reverse rotation can be made consistent regardless of the length of the pulse width of the Z-phase signal. As a result, the zero position of the rotation angle is determined with high accuracy regardless of the rotation direction.

(2) In the waveform measuring instrument according to (1), a sum of a predetermined number corresponding to the forward rotation and a predetermined number corresponding to the reverse rotation may be a number obtained by adding 1 to the number of the zero position detection timings during the HI period of the Z-phase signal. In this way, it becomes possible to reset the rotation angle to zero at any timing during the HI period of the Z-phase signal. This results in increased freedom of movement.

(3) In the waveform measuring instrument according to (2), the predetermined number corresponding to the reverse rotation may be equal to the number of the zero position detection timings during the HI period of the Z-phase signal. In this way, the determination circuit can be constructed simply.

(4) The waveform measuring instrument according to any one of (1) to (3) may further include a Z-phase counter that counts the zero position detection timings during the HI period of the Z-phase signal. In this way, it becomes possible to address the case in which a Z-phase signal having an unknown pulse width is inputted.

(5) A measurement method according to several embodiments is a measurement method for converting a count signal outputted by an encoder into a rotation angle, including generating, based on a Z-phase signal having a pulse width over a period including a plurality of zero position detection timings based on the count signal, a set signal when a predetermined number of the zero position detection timings corresponding to forward rotation or reverse rotation occurs during a HI period of the Z-phase signal, increasing or decreasing the rotation angle based on the count signal, and setting a count to zero when the rotation angle is increased and to a maximum value when the rotation angle is decreased, based on the set signal.

(6) In the measurement instrument according to (5), a sum of a predetermined number corresponding to the forward rotation and a predetermined number corresponding to the reverse rotation may be a number obtained by adding 1 to the number of the zero position detection timings during the HI period of the Z-phase signal.

(7) In the measurement method according to (6), the predetermined number corresponding to the reverse rotation may be equal to the number of the zero position detection timings during the HI period of the Z-phase signal.

(8) The measurement method according to any one of (5) to (7) may further include counting the zero position detection timings during the HI period of the Z-phase signal.

(9) A measurement program according to several embodiments is a measurement program for converting a count signal outputted by an encoder into a rotation angle, the measurement program being configured to cause a processor to execute processing including generating, based on a Z-phase signal having a pulse width over a period including a plurality of zero position detection timings based on the count signal, a set signal when a predetermined number of the zero position detection timings corresponding to forward rotation or reverse rotation occurs during a HI period of the Z-phase signal, increasing or decreasing the rotation angle based on the count signal, and setting a count to zero when the rotation angle is increased and to a maximum value when the rotation angle is decreased, based on the set signal.

(10) In the measurement program according to (9), a sum of a predetermined number corresponding to the forward rotation and a predetermined number corresponding to the reverse rotation may be a number obtained by adding 1 to the number of the zero position detection timings during the HI period of the Z-phase signal.

(11) In the measurement program according to (10), the predetermined number corresponding to the reverse rotation may be equal to the number of the zero position detection timings during the HI period of the Z-phase signal.

(12) In the measurement program according to any one of (9) to (11), the processing may further include counting the zero position detection timings during the HI period of the Z-phase signal.

According to the waveform measuring instrument, the measurement method, and the measurement program of the present disclosure, the angular zero position can be determined with high accuracy regardless of the rotation direction.

### BRIEF DESCRIPTION OF THE DRAWINGS

In the accompanying drawings:
FIG. 1 is a schematic diagram illustrating a configuration example in which an encoder is attached to a motor to be measured;
FIG. 2 is a graph illustrating a signal when a rotation angle is measured using a device according to a comparative example;
FIG. 3A is a graph illustrating the results of measuring the rotation angle only in the forward direction based on a Z-phase signal that is HI during a period including only one count signal in the device according to the comparative example;
FIG. 3B is a graph illustrating the results of measuring the rotation angle only in the forward direction based on a Z-phase signal that is HI during a period including a plurality of count signals in the device according to the comparative example;
FIG. 3C is a graph illustrating the results of measuring the rotation angle in the case in which the rotation changes to reverse rotation during forward rotation based on a Z-phase signal that is HI during a period including a plurality of count signals in the device according to the comparative example;
FIG. 3D is a graph illustrating the results of measuring the rotation angle in the case in which the rotation changes to reverse rotation during forward rotation based on a Z-phase signal that is HI during a period including a plurality of count signals in the device according to the comparative example;
FIG. 4 is a block diagram illustrating an example configuration of a waveform measuring instrument according to the present disclosure;
FIG. 5 is a graph illustrating an example of a signal when the rotation angle is measured by the waveform measuring instrument according to the present disclosure;
FIG. 6A is a diagram illustrating an example of a condition for counting up the rotation angle at the time of forward rotation;
FIG. 6B is a diagram illustrating an example of a condition for counting down the rotation angle at the time of reverse rotation;
FIG. 7A is a diagram illustrating an example of a condition for generating a forward rotation zero position timing;
FIG. 7B is a diagram illustrating an example of a condition for generating a reverse rotation zero position timing;
FIG. 8 is a diagram illustrating an example of the operation of the count period creation circuit at the time of forward rotation;
FIG. 9 is a diagram illustrating an example of the operation of the count period creation circuit at the time of reverse rotation;
FIG. 10A is a diagram illustrating an example of the operation of the rotation direction detection circuit when forward rotation continues;

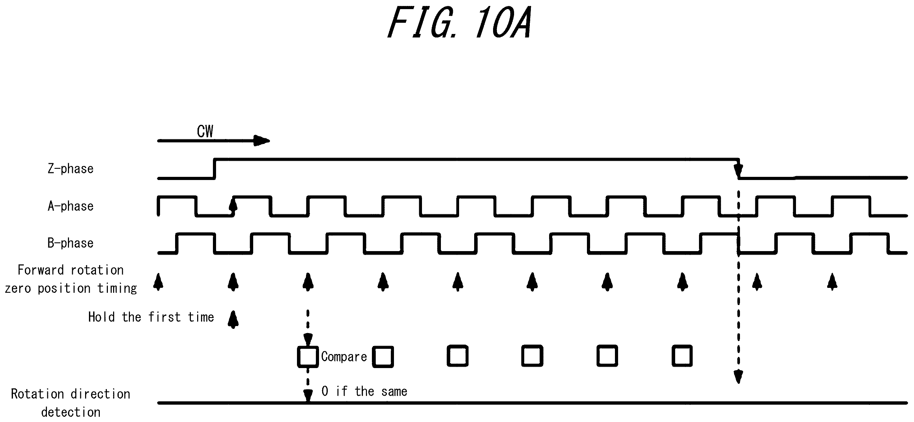

FIG. 10A is a diagram illustrating an example of the operation of the rotation direction detection circuit when reverse rotation continues;

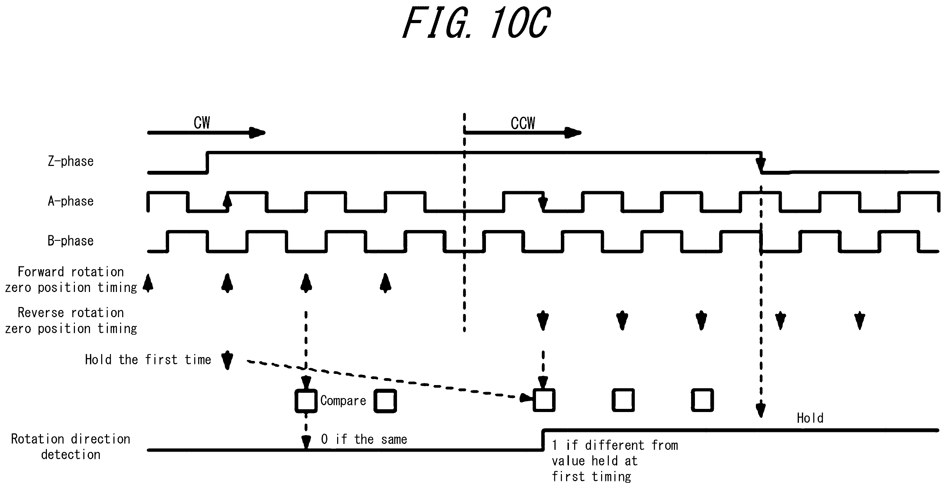

FIG. 10C is a diagram illustrating an example of the operation of the rotation direction detection circuit in the case of starting from forward rotation and then changing to reverse rotation;
FIG. 10C is a diagram illustrating an example of the operation of the rotation direction detection circuit in the case of starting from reverse rotation and then changing to forward rotation;

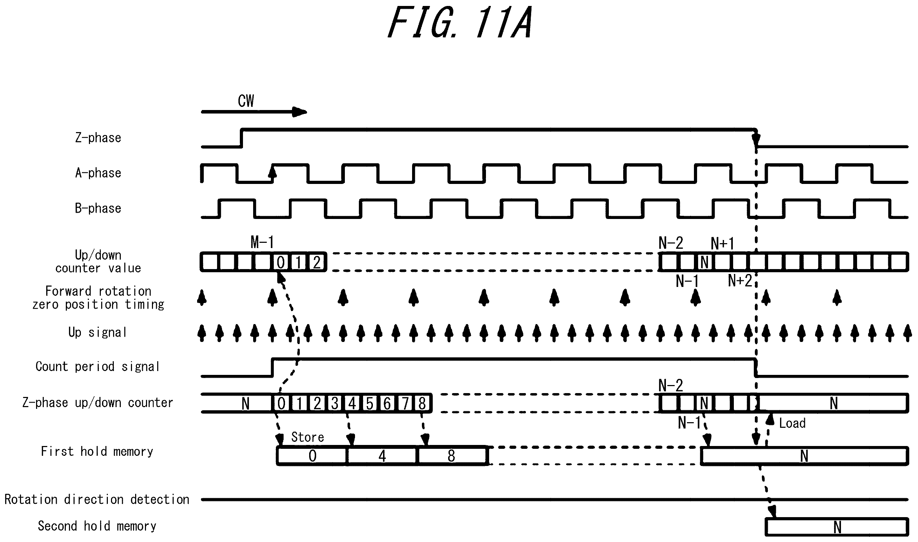

FIG. 11A is a diagram illustrating an example of a signal during operation under forward rotation;

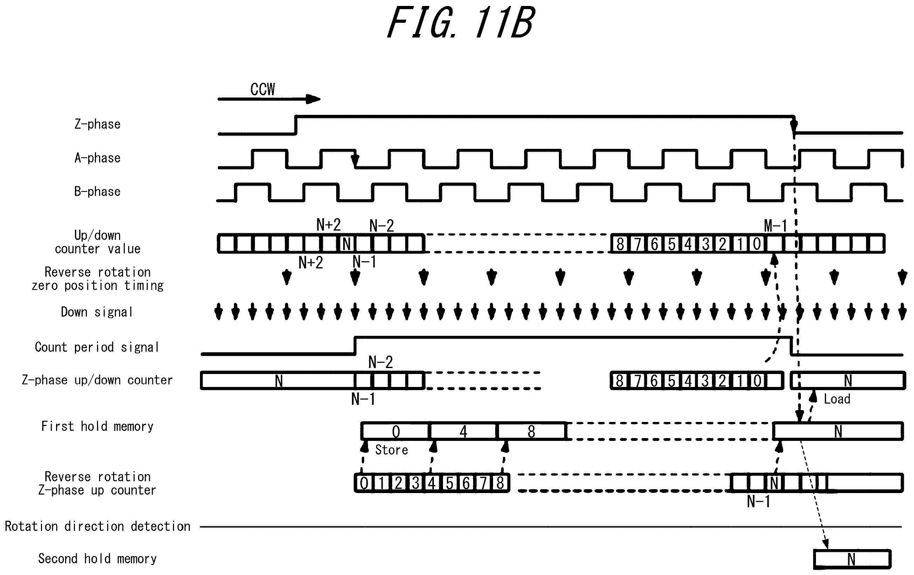

FIG. 11B is a diagram illustrating an example of a signal during operation under reverse rotation;

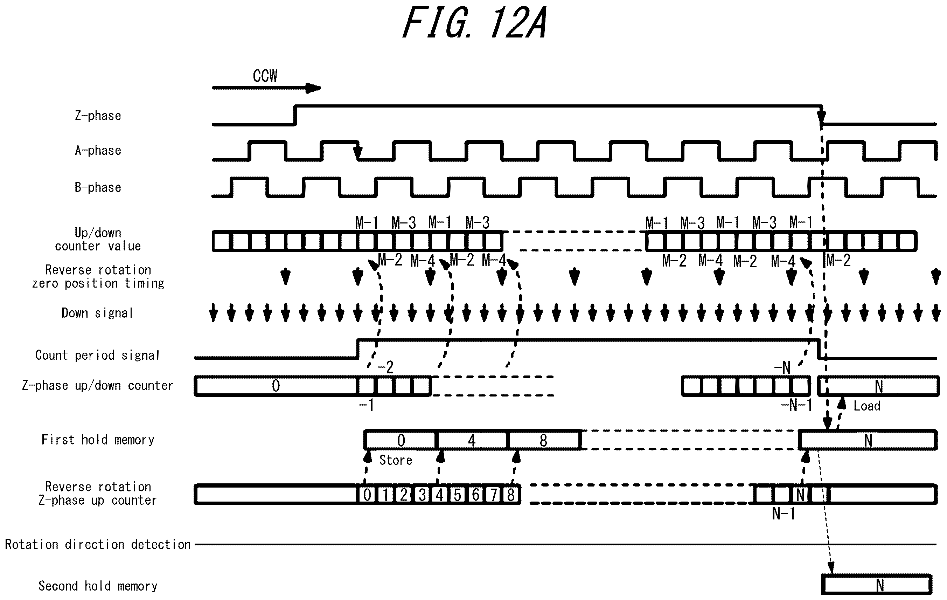

FIG. 12A is a diagram illustrating an example of operation in the case of starting from reverse rotation;

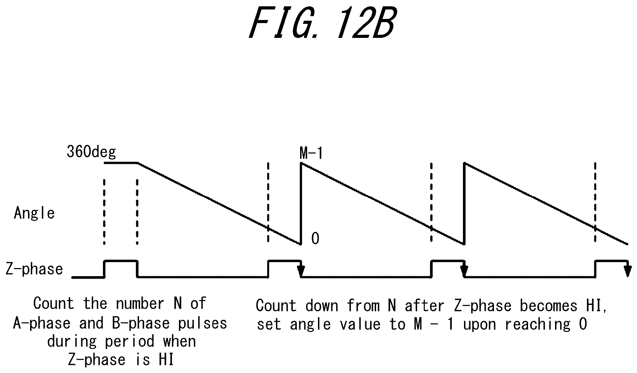

FIG. 12B is a graph illustrating an example of a signal when measuring the rotation angle in the case of starting from reverse rotation;

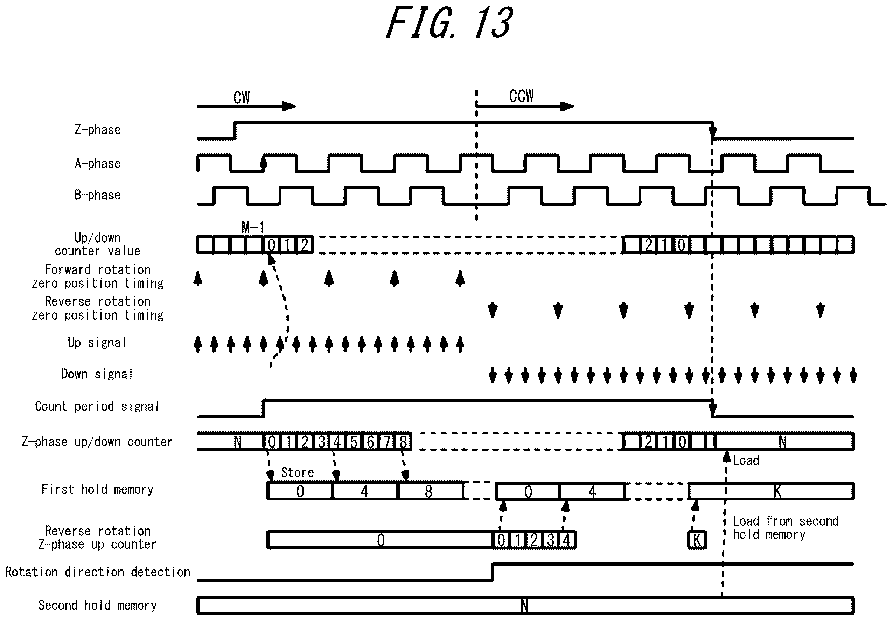

FIG. 13 is a graph illustrating an example of a signal when measuring the rotation angle in the case in which the rotation changes to reverse rotation during forward rotation;

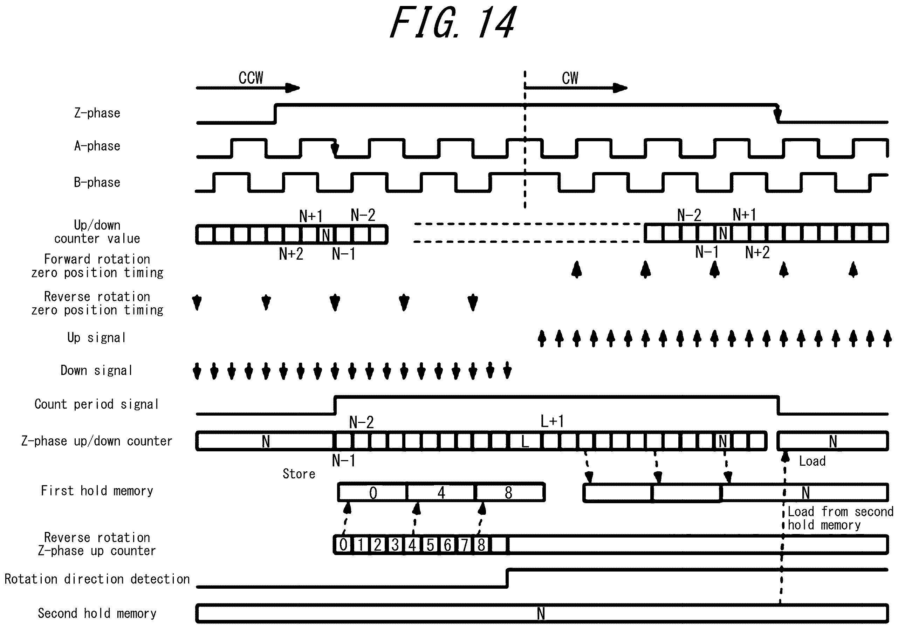

FIG. 14 is a graph illustrating an example of a signal when measuring the rotation angle in the case in which the rotation changes to forward rotation during reverse rotation;

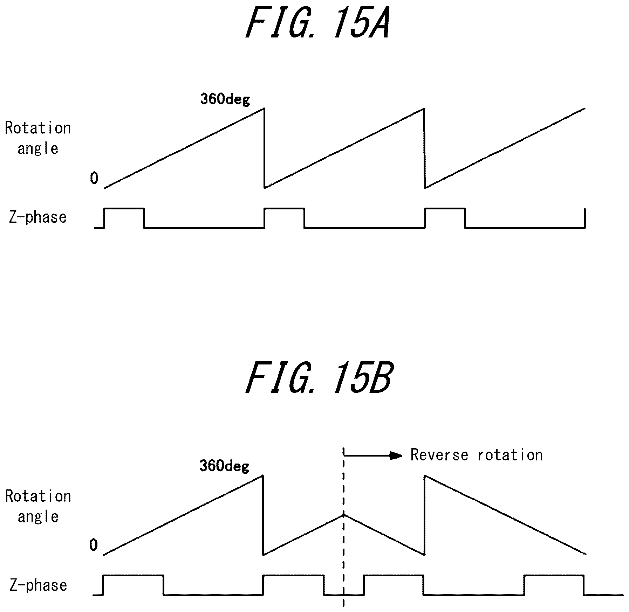

FIG. 15A is a graph illustrating an example of the results of measuring the rotation angle only in the forward direction in the present disclosure;
FIG. 15B is a graph illustrating an example of the results of measuring the rotation angle in the case in which the rotation changes to reverse rotation during forward rotation in the present disclosure; and

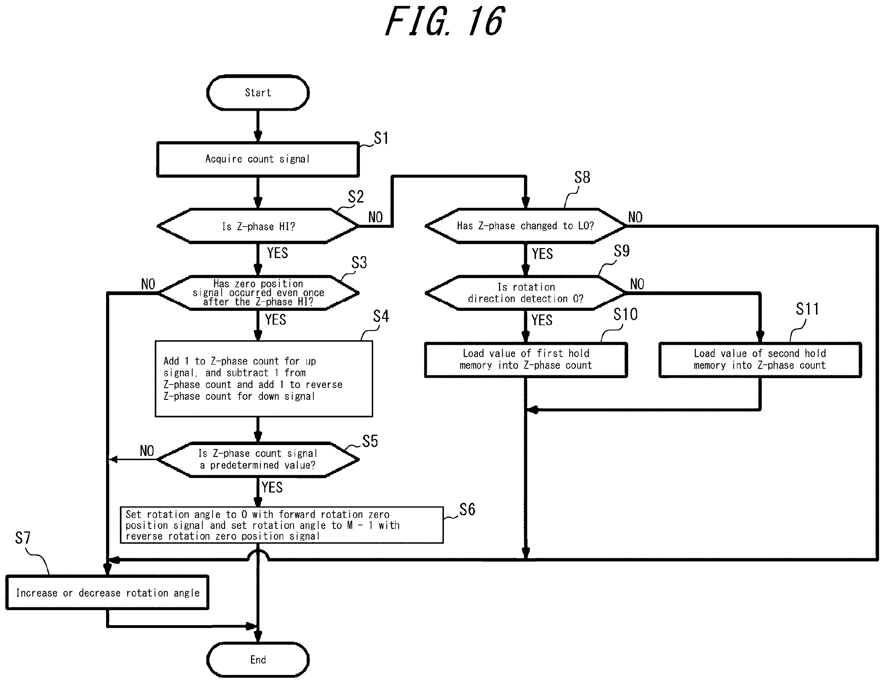

FIG. 16 is a flowchart illustrating an example of a procedure of a
measurement method according to the present disclosure.

### DETAILED DESCRIPTION

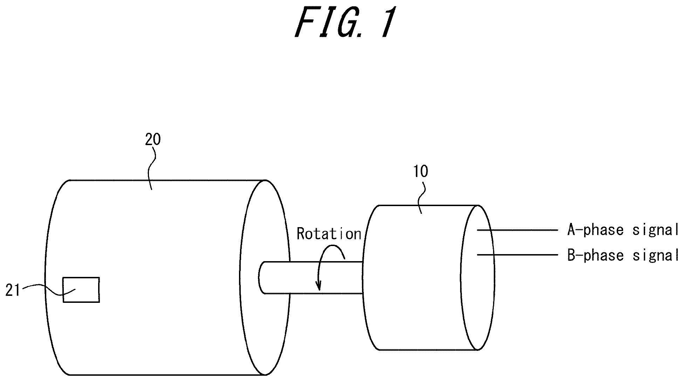

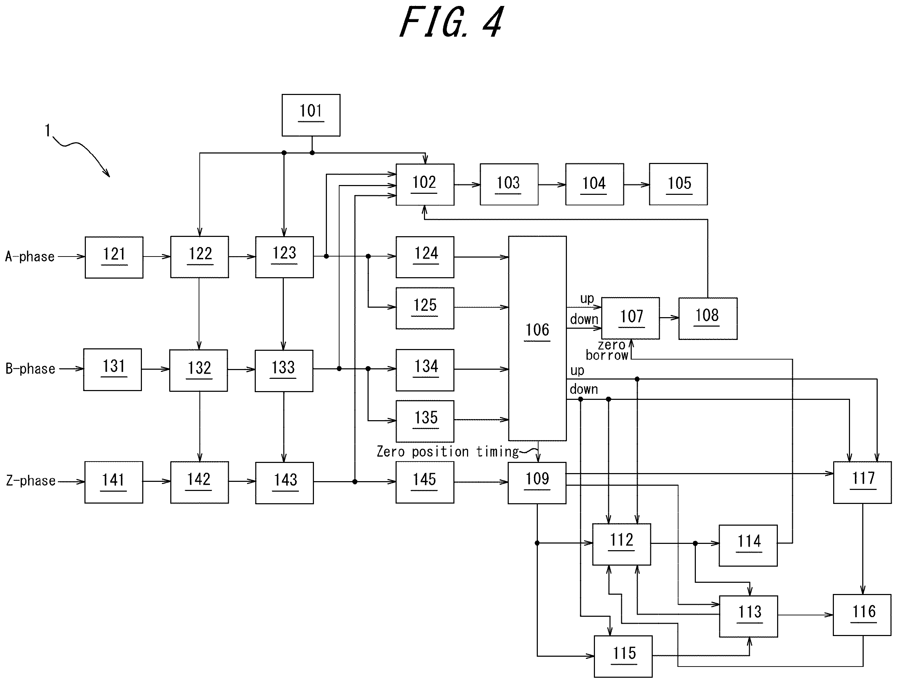

A waveform measuring instrument 1 (see FIG. 4) according to the present disclosure measures the rotation angle of a motor 20 based on an A-phase signal and a B-phase signal, which are pulse signals outputted by an encoder 10 attached to the motor 20, as illustrated in FIG. 1, for example. Furthermore, the waveform measuring instrument 1 sets the rotation angle of the motor 20 to 0 based on the Z-phase signal, which is a pulse signal outputted from the excitation position sensor 21 of the motor 20. Hereinafter, an embodiment of a waveform measuring instrument 1 according to the present disclosure and a measurement method or a measurement program executed by the waveform measuring instrument 1 will be described. The encoder 10 may be a rotary encoder. The measurement target is not limited to the motor 20. The device that outputs the Z-phase signal is not limited to the excitation position sensor 21.

### (Comparative Example)

A device according to a comparative example increases or decreases the measurement result of the rotation angle of the motor 20 based on the A-phase signal and B-phase signal outputted by the encoder 10 and sets the rotation angle to the zero position when the A-phase signal and B-phase signal satisfy predetermined conditions while the Z-phase signal is HI. Whether the rotation of motor 20 is forward or reverse is determined according to the state of the A-phase signal and B-phase signal when they change from LO to HI or from HI to LO, i.e., according to the combination of whether the A-phase signal and B-phase signal are HI or LO.

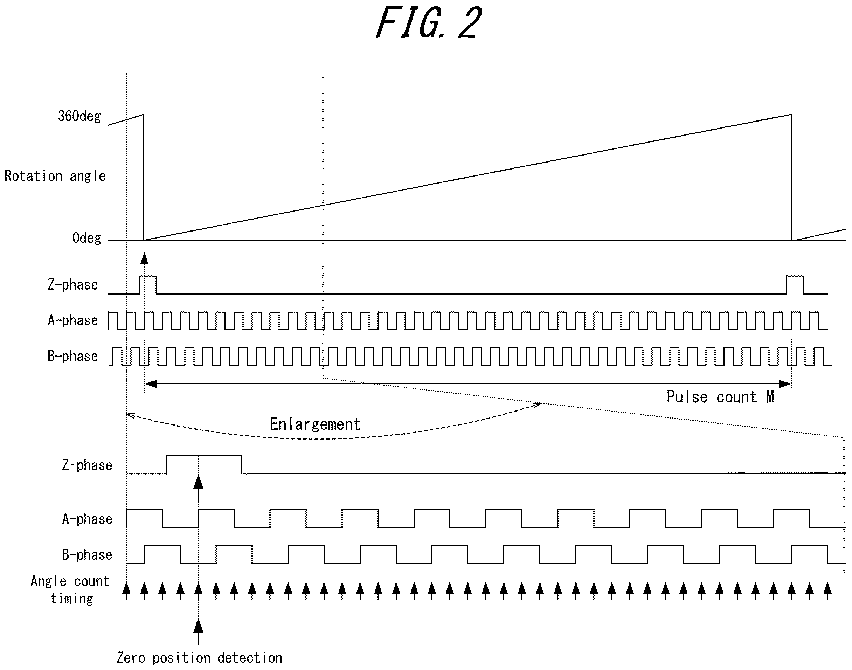

FIG. 2 is a graph illustrating an example of a signal when the rotation angle of the motor 20 is measured using the device according to the comparative example. As illustrated in the enlarged portion of FIG. 2, the device according to the comparative example increases the rotation angle by using the timing at which the state of the A-phase signal or the B-phase signal changes between LO and HI as the timing for counting the angle. In addition, the device of the comparative example sets the rotation angle to the zero position when, as the timing for position detection, the Z-phase signal is HI and the A-phase signal changes from LO to HI while the B-phase signal is LO.

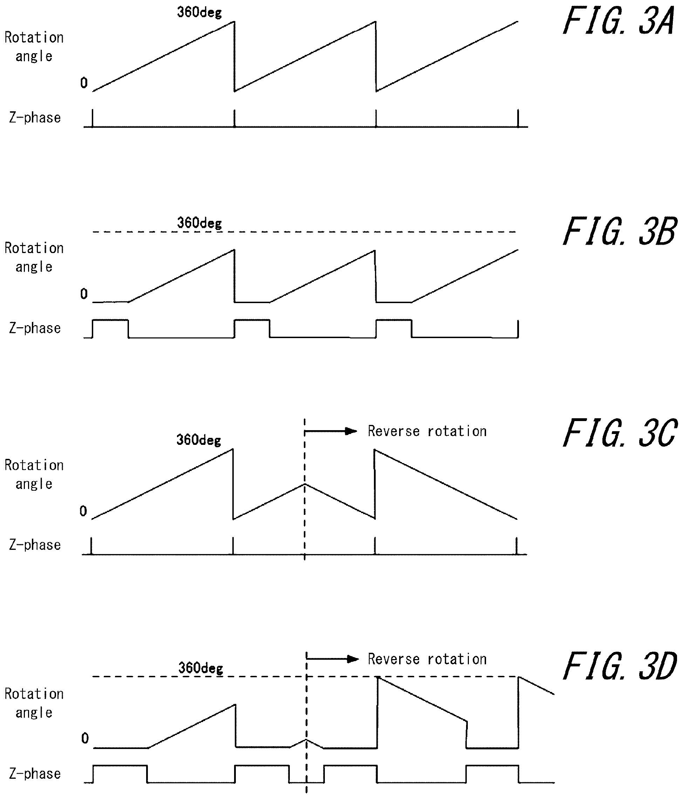

As illustrated in FIG. 3A, when the pulse width of the Z-phase signal is short, specifically, when only one zero position detection timing occurs while the Z-phase signal is HI, the rotation angle is set to zero only once. On the other hand, as illustrated in FIG. 3B, when the pulse width of the Z-phase signal is long, specifically, when a plurality of zero position detection timings occur while the Z-phase signal is HI, the rotation angle continues to be set to zero while the Z-phase signal is HI.

Here, as illustrated in FIG. 3C and FIG. 3D, the rotation may change from forward to reverse during the forward rotation. As illustrated in FIG. 3C, in a case in which the pulse width of the Z-phase signal is short, no error occurs in the rotation angle when the rotation angle is set to zero, even if the rotation changes to reverse rotation during forward rotation. On the other hand, as illustrated in FIG. 3D, in a case in which the pulse width of the Z-phase signal is long, an error in the rotation angle during reverse rotation occurs due to a difference in the timing at which the rotation changes to reverse rotation during forward rotation.

As described above, for example, the output of the excitation position sensor 21 of the motor 20 may be used as the Z-phase signal. However, it is difficult to adjust the pulse width of the pulse signal outputted from the excitation position sensor 21. Therefore, it is difficult to make an adjustment so that only one zero position detection timing occurs while the Z-phase signal is HI. Even if a plurality of zero position detection timings occur while the Z-phase signal is HI, it is necessary to reduce the error in the rotation angle regardless of whether the rotation is forward or reverse, i.e., regardless of the rotation direction.

### (Overview of waveform measuring instrument 1)

The waveform measuring instrument 1 (see FIG. 4) according to the present disclosure converts the A-phase signal and B-phase signal outputted by the encoder 10 that detects the rotation of the motor 20 into the rotation angle of the motor 20 to measure the rotation angle. Specifically, the waveform measuring instrument 1 counts the rotation angle from 0 degrees to 360 degrees as a numerical value from 0 to M - 1 indicating the rotation angle count. The waveform measuring instrument 1 increases or decreases the rotation angle count when the A-phase signal and the B-phase signal satisfy a count condition.

Furthermore, the waveform measuring instrument 1 according to the present disclosure sets the rotation angle count to zero in a case in which the A-phase signal and the B-phase signal satisfy the occurrence condition of the zero position detection timing while the Z-phase signal is HI. In the present disclosure, a plurality of zero position detection timings occur during the period in which the Z-phase signal is HI. That is, in the present disclosure, the Z-phase signal has a pulse width that spans a period that includes a plurality of zero position detection timings. The period during which the Z-phase signal is HI is also referred to as the HI period of the Z-phase signal.

When the Z-phase signal has a pulse width spanning a period including a plurality of zero position detection timings, an error occurs when setting the rotation angle to zero for both forward rotation and reverse rotation, as described in the device of the comparative example. The waveform measuring instrument 1 according to the present disclosure sets the rotation angle to zero when a predetermined number of zero position detection timings corresponding to either forward rotation or reverse rotation have occurred, so that the error when setting the rotation angle to zero regardless of the rotation direction can be reduced.

### (Configuration example of waveform measuring instrument 1)

An example configuration of the waveform measuring instrument 1 according to the present disclosure will be described below with reference to FIG. 4.

The functions of each component of the waveform measuring instrument 1 described below may be realized as a dedicated circuit. The functions of each component of the waveform measuring instrument 1 may be realized by causing at least one general-purpose processor to execute a program. The general-purpose processor may include a central processing unit (CPU), a graphics processing unit (GPU), or the like. Each component of the waveform measuring instrument 1 may include a storage as necessary. The storage may include, for example, a semiconductor memory or an electromagnetic storage medium. Each component of the waveform measuring instrument 1 may include a communication interface as necessary. The communication interface may be configured to be capable of communicating data or information by various communication standards.

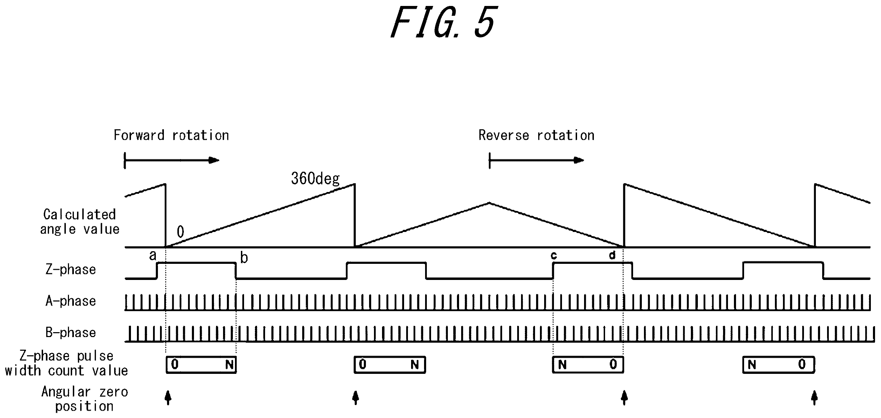

The waveform measuring instrument 1 in FIG. 4 generally operates as follows. The waveform measuring instrument 1 acquires, from the encoder 10 of the motor 20, an A-phase signal and a B-phase signal whose waveforms are illustrated as A-phase and B-phase in the graph illustrated in FIG. 5. The waveform measuring instrument 1 calculates a count corresponding to the rotation angle of the motor 20 in the forward and reverse directions based on the A-phase signal and the B-phase signal. The waveform measuring instrument 1 calculates a calculated angle value by converting the count into the rotation angle of the motor 20. The calculated angle value is a value obtained by converting the rotation angle count into an actual angle ranging from 0 degrees to 360 degrees. The horizontal axis of the graph in FIG. 5 corresponds to time.

The waveform measuring instrument 1 acquires a Z-phase signal, whose waveform is illustrated as Z-phase in the graph illustrated in FIG. 5, from the excitation position sensor 21 of the motor 20 and detects the rotational position when the rotation angle of the motor 20 becomes zero, i.e., the angular zero position, based on the Z-phase signal. In order to detect the angular zero position, the waveform measuring instrument 1 counts the number of up or down signals during the period in which the Z-phase signal is HI and calculates this count as the Z-phase pulse width count value. When detecting an angular zero position during forward rotation of the motor 20, the waveform measuring instrument 1 sets the count corresponding to the rotation angle to zero so that the calculated angle value becomes zero. When the motor 20 is rotating in the forward direction, the waveform measuring instrument 1 counts the period during which the Z-phase signal is HI with an up signal to calculate the Z-phase pulse width count value. When the motor 20 is rotating in the reverse direction, the waveform measuring instrument 1 calculates the HI period of the Z-phase signal using a down signal from the Z-phase pulse width count value calculated during forward rotation, identifies the angular zero position, and sets the count corresponding to the rotation angle to the maximum value so that the calculated angle value becomes the maximum value. For example, if the rotation angle is calculated in increments of 1 degree, the maximum value of the calculated angle value is 359 degrees. In the present disclosure, a rotation angle from 0 degrees to 360 degrees is represented by M counts. In this case, the maximum value of the calculated angle value is 360 × (M - 1)/M degrees.

The waveform measuring instrument 1 includes an input amplifier 121 that acquires the A-phase signal from the encoder 10, an input amplifier 131 that acquires the B-phase signal from the encoder 10, and an input amplifier 141 that acquires the Z-phase signal from the excitation position sensor 21 of the motor 20.

The waveform measuring instrument 1 includes a sample timing generating circuit 101. The sample timing generating circuit 101 may be a clock generating circuit. The sample timing generating circuit 101 outputs a sample timing signal to A/D converters 122, 132, 142, interface circuits 123, 133, 143, and the memory controller 102, which will be described later.

The waveform measuring instrument 1 includes an A/D converter 122 that converts the A-phase signal acquired by the input amplifier 121 into a digital signal, an A/D converter 132 that converts the B-phase signal acquired by the input amplifier 131 into a digital signal, and an A/D converter 142 that converts the Z-phase signal acquired by the input amplifier 141 into a digital signal. Hereinafter, the signals obtained by converting the A-phase signal, the B-phase signal, and the Z-phase signal into digital signals will be simply referred to as the A-phase signal, the B-phase signal, and the Z-phase signal, respectively. The A/D converters 122, 132, 142 operate in synchronization with the sample timing signal.

The waveform measuring instrument 1 includes the interface circuit 123, which outputs the A-phase signal to each component, the interface circuit 133, which outputs the B-phase signal to each component, and the interface circuit 143, which outputs the Z-phase signal to each component. The interface circuits 123, 133, 143 operate in synchronization with the sample timing signal.

The waveform measuring instrument 1 includes a memory controller 102, a waveform memory 103, a display waveform creation circuit 104, and a display 105. The memory controller 102 acquires the A-phase signal, the B-phase signal, the Z-phase signal, and an angle signal, which will be described later, in synchronization with the sample timing signal. The waveform memory 103 stores the waveforms of various signals acquired by the memory controller 102. The display waveform creation circuit 104 creates an image or the like that displays the waveform stored in the waveform memory 103. The display 105 displays the image or the like created by the display waveform creation circuit 104. The display 105 may be configured to include a variety of displays, such as a liquid crystal display.

The waveform measuring instrument 1 includes an edge detection circuit 124 that detects the edge of the A-phase signal, i.e., a change in the state of the A-phase signal between LO and HI, and an edge detection circuit 134 that detects the edge of the B-phase signal, i.e., a change in the state of the B-phase signal between LO and HI.

The waveform measuring instrument 1 includes a level determination circuit 125 that judges the level of the A-phase signal, i.e., whether the A-phase signal is LO or HI, a level determination circuit 135 that determines the level of the B-phase signal, i.e., whether the B-phase signal is LO or HI, and a level determination circuit 145 that determines the level of the Z-phase signal, i.e., whether the Z-phase signal is LO or HI.

The waveform measuring instrument 1 includes a count condition determination circuit 106. The count condition determination circuit 106 determines whether rotation of the motor 20 is forward rotation or reverse rotation based on the edges and levels of the A-phase signal and the edges and levels of the B-phase signal. Forward rotation may be rotation in either a clockwise or counterclockwise direction. Reverse rotation is the rotation in the opposite direction to forward rotation. In the present disclosure, forward rotation is defined as rotation in the clockwise direction and reverse rotation is defined as rotation in the counterclockwise direction. Forward rotation and reverse rotation are also referred to as CW and CCW, respectively. The count condition determination circuit 106 increases the rotation angle count when the motor 20 rotates in the forward direction and decreases the rotation angle count when the motor 20 rotates in the reverse direction. That is, the A-phase signal and the B-phase signal are used to determine an increase or decrease in the rotation angle count. The A-phase signal and the B-phase signal are also collectively referred to as count signals. The count condition determination circuit 106 outputs an up signal in the case of determining to increase the rotation angle count and outputs a down signal in the case of determining to decrease the rotation angle count. In FIG. 4, the up signal is represented as "up". The down signal is represented as "down".

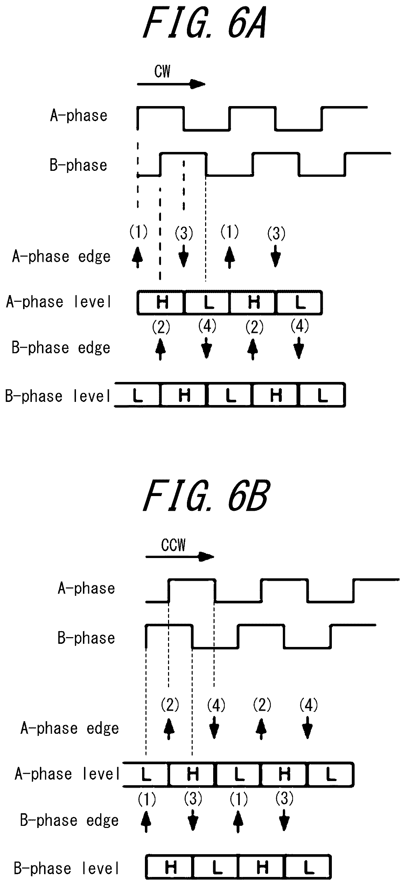

The count condition determination circuit 106 outputs an up signal when the edge and level of the A-phase signal and the edge and level of the B-phase signal satisfy the conditions illustrated in Table 1 below. The waveforms of the A-phase signal and the B-phase signal corresponding to each of the conditions (1) to (4) in Table 1 are illustrated in FIG. 6A.

**[Table 1]**

| | | |
|---|---|---|
| (1) | A phase H edge | B phase L level |
| (2) | B phase H edge | A phase H level |
| (3) | A phase L edge | B phase H level |
| (4) | B phase L edge | A phase L level |

The count condition determination circuit 106 outputs a down signal when the edge and level of the A-phase signal and the edge and level of the B-phase signal satisfy the conditions illustrated in Table 2 below. The waveforms of the A-phase signal and the B-phase signal corresponding to each of the conditions (1) to (4) in Table 2 are illustrated in FIG. 6B.

**[Table 2]**

| | | |
|---|---|---|
| (1) | B phase H edge | A phase L level |
| (2) | A phase H edge | B phase H level |
| (3) | B phase L edge | A phase H level |
| (4) | A phase L edge | B phase L level |

The count condition determination circuit 106 determines the forward rotation zero position timing and the reverse rotation zero position timing based on the edge and level of the A-phase signal and the edge and level of the B-phase signal. The forward rotation zero position timing and the reverse rotation zero position timing are also collectively referred to as zero position timing. The forward rotation zero position timing is the timing for identifying the zero position when the motor 20 is rotating in the forward direction. The reverse rotation zero position timing is the timing for identifying the zero position when the motor 20 is rotating in the reverse direction.

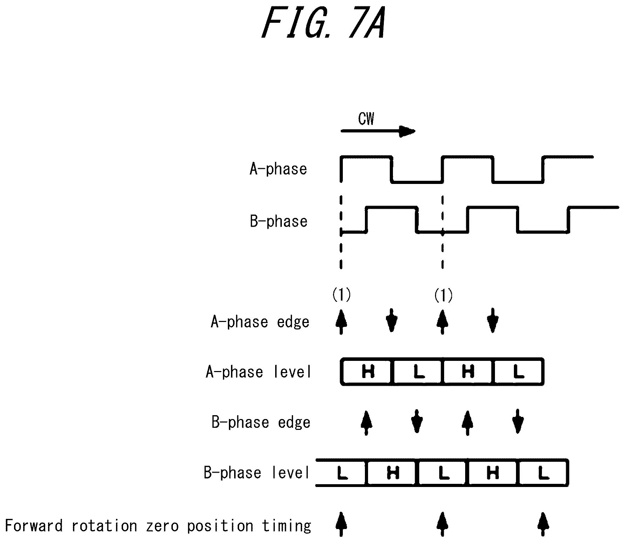

The count condition determination circuit 106 determines that the forward rotation zero position timing has occurred in a case in which the A-phase signal and the B-phase signal satisfy the conditions illustrated in Table 3 below, i.e., the conditions (1) in Table 1 and FIG. 6A. Occurrence of the forward rotation zero position timing in the case of conditions (1) in Table 3 and FIG. 6A being satisfied is illustrated in FIG. 7A.

**[Table 3]**

| | | |
|---|---|---|
| (1) | A phase H edge | B phase L level |

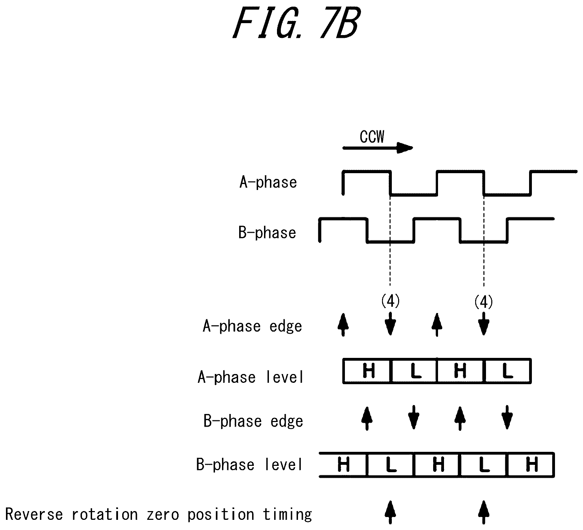

The count condition determination circuit 106 determines that the reverse rotation zero position timing has occurred in a case in which the A-phase signal and the B-phase signal satisfy the conditions illustrated in Table 4 below, i.e., the conditions (4) in Table 2 and FIG. 6B. Occurrence of the reverse rotation zero position timing in the case of conditions (4) in Table 4 and FIG. 6B being satisfied is illustrated in FIG. 7B.

**[Table 4]**

| | | |
|---|---|---|
| (4) | A phase L edge | B phase L level |

The waveform measuring instrument 1 includes an up/down counter 107. The up/down counter 107 increases the rotation angle count in the case of acquiring an up signal from the count condition determination circuit 106 and decreases the rotation angle count in the case of acquiring a down signal from the count condition determination circuit 106. In the present disclosure, it is assumed that the up/down counter 107 represents the rotation angle from 0 degrees to 360 degrees with M values from 0 to M - 1. In other words, the rotation angle count has values from 0 to M - 1. When the angular zero position illustrated in FIG. 5 is detected, the up/down counter 107 sets the rotation angle count to zero during forward rotation and sets the rotation angle count to M - 1, i.e., the maximum value of the count in the present disclosure, during reverse rotation. The up/down counter 107 is also simply called a counter.

The waveform measuring instrument 1 includes an angle conversion circuit 108. The angle conversion circuit 108 acquires the rotation angle count from the up/down counter 107, converts the rotation angle into a numerical value in the range from 0 degrees to 360 degrees, and outputs the result to the memory controller 102 as an angle signal.

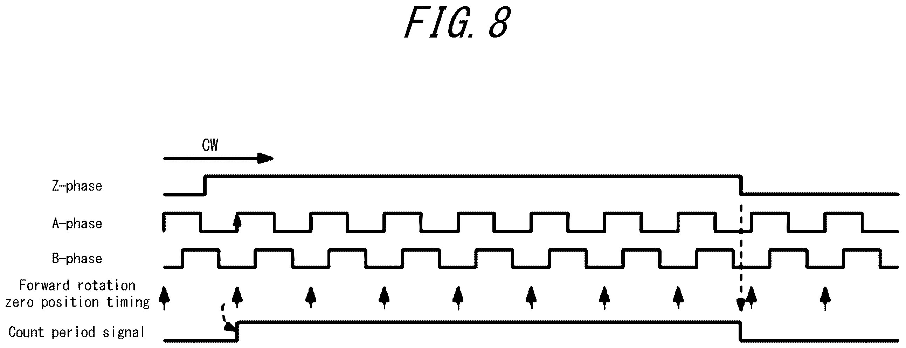

The waveform measuring instrument 1 includes a count period creation circuit 109. The operation of the count period creation circuit 109 during forward rotation will be described with reference to the graph in FIG. 8. The horizontal axis of the graph in FIG. 8 represents time. When acquiring the forward rotation zero position timing from the count condition determination circuit 106, the count period creation circuit 109 detects whether this is the first acquisition of the forward rotation zero position timing after the Z-phase signal becomes HI. The count period creation circuit 109 sets the count period signal to HI when the forward rotation zero position timing is acquired for the first time and sets the count period signal to LO when the Z-phase signal becomes LO.

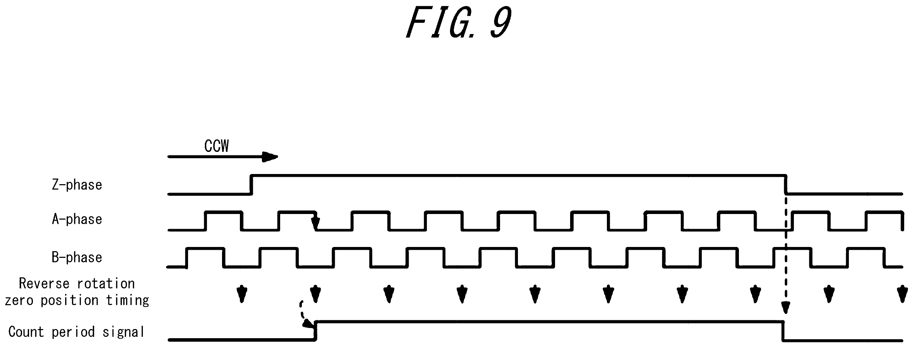

The operation of the count period creation circuit 109 during reverse rotation will be described with reference to the graph in FIG. 9. The horizontal axis of the graph in FIG. 9 represents time. When acquiring the reverse rotation zero position timing from the count condition determination circuit 106, the count period creation circuit 109 detects whether this is the first acquisition of the reverse rotation zero position timing after the Z-phase signal becomes HI. The count period creation circuit 109 sets the count period signal to HI when the reverse rotation zero position timing is acquired for the first time and sets the count period signal to LO when the Z-phase signal becomes LO.

The waveform measuring instrument 1 includes a Z-phase up/down counter 112 and a first hold memory 113. The Z-phase up/down counter 112 is also simply referred to as the Z-phase counter.

The Z-phase up/down counter 112 activates a counting operation when the count period signal outputted from the count period creation circuit 109 becomes HI. During forward rotation, the Z-phase up/down counter 112 is set to zero when the count operation is activated and counts the count signal while the count period signal is HI by incrementing the count in response to an up signal.

The first hold memory 113 holds the number of count signals counted by the Z-phase up/down counter 112 during forward rotation when the forward rotation zero position timing occurs while the count period signal is HI. That is, the Z-phase up/down counter 112 stores the number of counted up signals in the first hold memory 113 every time a forward rotation zero position timing occurs. In the present disclosure, the number of count signals during which the count period signal is HI is assumed to be N. Furthermore, when the forward rotation zero position timing occurs under the conditions of Table 3 described above, the forward rotation zero position timing occurs once every four up signals are generated. Therefore, in this case, N is a multiple of four.

The number counted by the Z-phase up/down counter 112 corresponds to the Z-phase pulse width count value illustrated in FIG. 5.

During forward rotation, when the count period signal outputted from the count period creation circuit 109 becomes LO, the Z-phase up/down counter 112 loads N from the first hold memory 113.

During reverse rotation, when the count period signal outputted from the count period creation circuit 109 becomes HI, the Z-phase up/down counter 112 performs a countdown in response to the down signal. In the case of switching from forward rotation to reverse rotation as illustrated in FIG. 5, when the count period signal outputted from the count period creation circuit 109 during forward rotation becomes LO, N is loaded from the first hold memory 113 to the Z-phase up/down counter 112, so that during reverse rotation, the Z-phase up/down counter 112 is decremented, i.e., decreased by 1, from N in response to the down signal.

During reverse rotation, the Z-phase up/down counter 112 is decremented from N in response to a down signal and determines that the position upon reaching 0 is the 0 position of the rotation angle during reverse rotation.

In a case in which the rotation of the motor 20 starts in reverse and no forward rotation occurs at all, the number of count signals (N) during the period when the count period signal is HI cannot be calculated by the Z-phase up/down counter 112, and therefore no value is stored in the first hold memory 113. The waveform measuring instrument 1 includes a reverse rotation Z-phase up counter 115 so that N can be counted when the rotation of the motor 20 starts in the reverse direction. The reverse rotation Z-phase up counter 115 activates its counting operation when the count period signal becomes HI. The reverse rotation Z-phase up counter 115 counts the down signal while the count period signal is HI by being incremented in response to the down signal. The reverse rotation Z-phase up counter 115 stores the number of counted down signals in the first hold memory 113 each time the reverse rotation zero position timing occurs during reverse rotation. In a case in which the reverse rotation continues until the Z-phase signal becomes LO, the number (N) of count signals while the count period signal is HI is stored in the first hold memory 113 by the operation of the reverse rotation Z-phase up counter 115. Similarly to forward rotation, in a case in which the reverse rotation zero position timing occurs under the conditions of Table 4 described above, the reverse rotation zero position timing occurs once for every four down signals during reverse rotation as well. Therefore, N is a multiple of four in this case as well.

During reverse rotation as well, the Z-phase up/down counter 112 loads N from the first hold memory 113 when the count period signal outputted from the count period creation circuit 109 becomes LO.

From the above explanation, the value stored in the first hold memory 113 is, during forward rotation, the value of the Z-phase up/down counter 112 at the final forward rotation zero position timing before the Z-phase signal falls, i.e., before the Z-phase signal becomes LO. The value stored in the first hold memory 113 is, during reverse rotation, the value of the reverse rotation Z-phase up counter 115 at the final reverse rotation zero position timing.

The value of the first hold memory 113 is loaded into the Z-phase up/down counter 112 at the timing when the count period signal becomes LO, both during forward rotation and reverse rotation.

While the Z-phase signal is HI, the rotation of the motor 20 may change from forward to reverse. While the Z-phase signal is HI, the rotation of the motor 20 may also change from reverse to forward.

For example, in a case in which the rotation of the motor 20 changes from forward to reverse while the Z-phase signal is HI, the Z-phase up/down counter 112 is cleared to 0 when the Z-phase signal becomes HI and is incremented by the up signal. After the rotation is reversed, the Z-phase up/down counter 112 is decremented by the down signal, and when the Z-phase signal becomes LO, the value of the Z-phase up/down counter 112 becomes 0. The reverse rotation Z-phase up counter 115 is incremented only by the down signal after the reverse rotation. When the Z-phase signal becomes LO, the value of the reverse rotation Z-phase up counter 115 thus becomes a value smaller than N. Therefore, in this case, when the Z-phase signal becomes LO, the value stored in the first hold memory 113 from the reverse rotation Z-phase up counter 115 will be a value smaller than N. As a result, the value loaded into the Z-phase up/down counter 112 will also be smaller than N, and the waveform measuring instrument 1 will not be able to operate correctly.

The waveform measuring instrument 1 includes a second hold memory 116 and a rotation direction detection circuit 117 in order to handle the case in which the rotation direction of the motor 20 changes while the Z-phase signal is HI.

The rotation direction detection circuit 117 holds information as to whether the forward rotation zero position timing or the reverse rotation zero position timing has been detected when the first zero position timing is detected after the Z-phase signal becomes HI in the count period creation circuit 109. When a new zero position timing is detected, the rotation direction detection circuit 117 compares the newly detected zero position timing with the first zero position timing. The rotation direction detection circuit 117 becomes 0 in a case in which the newly detected zero position timing and the first zero position timing are both the forward rotation zero position timing or both the reverse rotation zero position timing. The rotation direction detection circuit 117 becomes 1 in a case in which the newly detected zero position timing is the forward rotation zero position timing and the first zero position timing is the reverse rotation zero position timing, or a case in which the newly detected zero position timing is the reverse rotation zero position timing and the first zero position timing is the forward rotation zero position timing. In other words, the rotation direction detection circuit 117 becomes 0 in a case in which the newly detected zero position timing and the first zero position timing are both zero position timings in the same rotation direction, and becomes 1 in a case in which they are zero position timings in different rotation directions. The rotation direction detection circuit 117 holds the value, 0 or 1, when the Z-phase signal becomes LO, i.e., when the count period signal becomes LO.

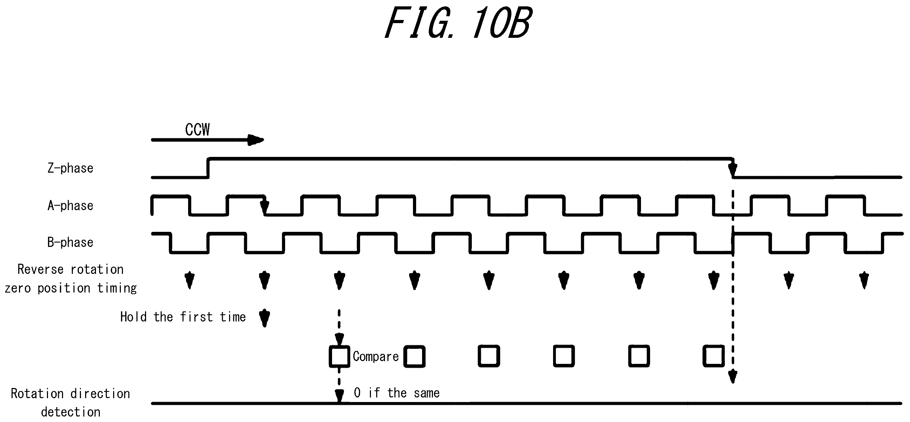

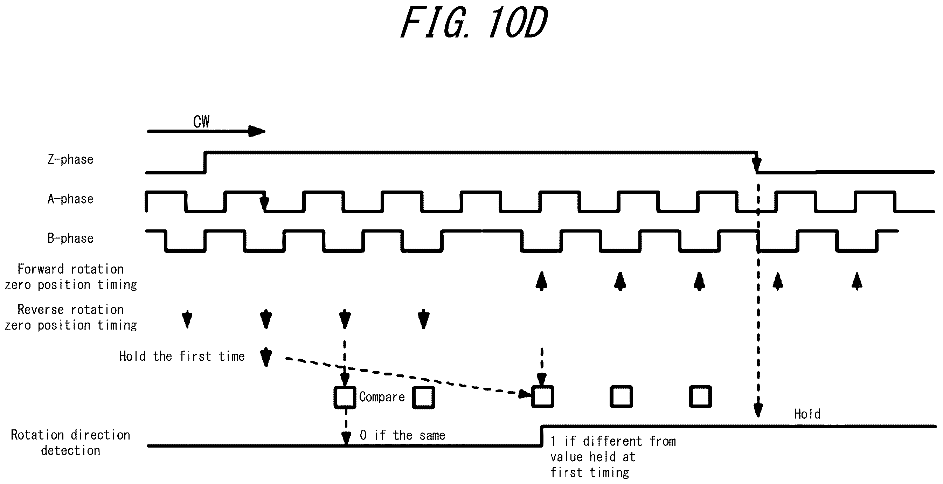

The rotation direction detection circuit 117 operates as illustrated in FIG. 10A when the motor 20 continues to rotate in the forward direction and operates as illustrated in FIG. 10B when the motor 20 continues to rotate in the reverse direction. The rotation direction detection circuit 117 operates as illustrated in FIG. 10C when the rotation of the motor 20 starts from forward rotation and changes to reverse rotation and operates as illustrated in FIG. 10D when the rotation of the motor 20 starts from reverse rotation and changes to forward rotation.

In a case in which the rotation direction detection circuit 117 is set to 0, the value of the first hold memory 113 is loaded into the Z-phase up/down counter 112 and the value of the first hold memory 113 is stored in the second hold memory 116 when the Z-phase signal falls. In a case in which the rotation direction detection circuit 117 is set to 1, the value of the first hold memory 113 is not stored in the second hold memory 116. In other words, in a case in which the rotation direction detection circuit 117 is set to 1, the value of the second hold memory 116 is held as is.

Here, the rotation direction detection circuit 117 being 0 means that the rotation direction did not change during the period in which the count period signal was HI. In this case, when the rotation direction detection circuit 117 is at 0, the value of the first hold memory 113 when the Z-phase signal falls is the number (N) of count signals while the count period signal is HI. That is, in this case, the value stored in the second hold memory 116 is the number (N) of count signals while the count period signal is HI.

On the other hand, the rotation direction detection circuit 117 becoming 1 means that the rotation direction has changed during the period in which the count period signal is HI. Hence, in the case in which the rotation direction detection circuit 117 becomes 1, the value of the first hold memory 113 when the Z-phase signal falls is a value smaller than the number (N) of count signals while the count period signal is HI. In this case, the value of the first hold memory 113 is not stored in the second hold memory 116, so that the value of the second hold memory 116 remains N. In other words, regardless of whether the rotation direction changes during the period in which the count period signal is HI, the value stored in the second hold memory 116 remains the number of count signals (N) while the count period signal is HI.

The above-described counting operation of the Z-phase up/down counter 112 is summarized in Table 5 below.

**[Table 5]**

| Condition | Count operation |
|---|---|
| First forward rotation zero position timing when count period signal becomes HI | Clear to zero |
| Count period signal is HI, and up signal | Increment (+1) |
| Count period signal is HI, and down signal | Decrement (-1) |
| Count period signal is L edge, and rotation direction detection is 0 | Load value of first hold memory |
| Count period signal is L edge, and rotation direction detection is 1 | Load value of second hold memory |
| Conditions other than the above | Hold count |

The above-described counting operation of the reverse rotation Z-phase up counter 115 is summarized in Table 6 below.

**[Table 6]**

| Condition | Count operation |
|---|---|
| First reverse rotation zero position timing when count period signal becomes HI | Clear to zero |
| Count period signal is HI, and down signal | Increment (+1) |
| Conditions other than the above | Hold count |

The waveform measuring instrument 1 includes a zero position determination circuit 114. During forward rotation, the zero position determination circuit 114 outputs an instruction to the up/down counter 107 to set the rotation angle count to zero, according to the value counted by the Z-phase up/down counter 112. The instruction to set the rotation angle count to zero is also called a set to zero signal, and is represented as "zero" in FIG. 4. During reverse rotation, the zero position determination circuit 114 outputs an instruction to the up/down counter 107 to load the maximum value of the rotation angle count according to the value counted by the Z-phase up/down counter 112. The instruction to load the maximum value is also called a set to maximum value signal and is represented as "borrow" in FIG. 4. As described above, the waveform measuring instrument 1 expresses rotation angles from 0 degrees to 360 degrees with M values from 0 to M - 1. Therefore, the maximum value of the rotation angle count is M - 1.

### (Operation example of waveform measuring instrument 1)

A specific example of the operation of each component of the above-described waveform measuring instrument 1 will now be described.

The operation of the waveform measuring instrument 1 during forward rotation will be described with reference to FIG. 11A. The Z-phase up/down counter 112 is set to zero when the count period signal becomes HI, that is, when the first forward rotation zero position timing occurs after the Z-phase signal becomes HI. Thereafter, while the count period signal is HI, the Z-phase up/down counter 112 is incremented, that is, 1 is added, in response to the input of an up signal generated during forward rotation. When the Z-phase signal becomes LO, i.e., when the count period signal becomes LO, the Z-phase up/down counter 112 stores the value counted while the count period signal was HI, which is N in the present disclosure, in the first hold memory 113. In other words, the Z-phase up/down counter 112 causes the first hold memory 113 to hold the count value at the time when the final forward rotation zero position timing occurs during the period in which the count period signal is HI. The value (N) stored in the first hold memory 113 is loaded into the Z-phase up/down counter 112 at the falling edge of the count period signal, that is, at the L edge. Also, since the rotation direction does not change while the count period signal is HI, the rotation direction detection circuit 117 is at 0. Since the rotation direction detection circuit 117 is 0, N is stored in the second hold memory 116 from the first hold memory 113. When the forward rotation is repeated, the Z-phase up/down counter 112 repeats the above-described operation every time the Z-phase signal becomes HI.

When determining that the Z-phase up/down counter 112 has reached zero, the zero position determination circuit 114 outputs a set to zero signal to the up/down counter 107. During forward rotation, the Z-phase up/down counter 112 becomes zero when the count period signal becomes HI. Therefore, during forward rotation, the zero position determination circuit 114 outputs a set to zero signal to the up/down counter 107 when the count period signal becomes HI.

The up/down counter 107 is set to zero when it receives the set to zero signal from the zero position determination circuit 114. In other words, the up/down counter 107 is set to zero when the count period signal becomes HI, that is, when the first forward rotation zero position timing occurs after the Z-phase signal becomes HI. Thereafter, the up/down counter 107 executes a count-up operation every time it receives an up signal.

With reference to FIG. 11B, the operation of the waveform measuring instrument 1 during reverse rotation will be described on the assumption that forward rotation is started first and N is stored in the first hold memory 113. As described above, N is loaded into the Z-phase up/down counter 112 from the first hold memory 113. While the count period signal is HI, the Z-phase up/down counter 112 is decremented, that is, reduced by 1, in response to the input of a down signal generated during reverse rotation.

During the reverse rotation illustrated in FIG. 11B, the reverse rotation Z-phase up counter 115 counts while the count period signal is HI, and when the count period signal becomes LO, the reverse rotation Z-phase up counter 115 stores N, which is the count while the count period signal was HI, in the first hold memory 113. In other words, the Z-phase up counter 115 causes the first hold memory 113 to hold the count value at the time when the final reverse rotation zero position timing occurs during the period in which the count period signal is HI. The value (N) stored in the first hold memory 113 is loaded into the Z-phase up/down counter 112 at the falling edge of the count period signal, that is, at the L edge. Also, since the rotation direction does not change while the count period signal is HI, the rotation direction detection circuit 117 is at 0. Since the rotation direction detection circuit 117 is 0, the value N stored in the first hold memory 113 is also stored in the second hold memory 116. When the reverse rotation is repeated, the Z-phase up counter 115 repeats the above-described operation every time the Z-phase signal becomes HI.

The zero position determination circuit 114 outputs an instruction to the up/down counter 107 to load the maximum value of the rotation angle count, that is, M - 1 in the present disclosure, in synchronization with the timing when another down signal is inputted after the count of the Z-phase up/down counter 112 reaches zero. This operation realizes the operation of setting the rotation angle count to the maximum value, that is, M - 1, during reverse rotation.

The up/down counter 107 increments and decrements the rotation angle count based on the up signal and down signal from the count condition determination circuit 106, both during forward rotation as illustrated in FIG. 11A and reverse rotation as illustrated in FIG. 11B, and either sets the rotation angle count to zero based on an instruction from the zero position determination circuit 114, i.e., a set to zero signal, or loads M - 1 to the rotation angle count based on a set to maximum value signal. The rotation angle count of the up/down counter 107 is converted into a rotation angle by the angle conversion circuit 108.

In both the forward and reverse rotations, counting up and counting down are performed with a value corresponding to the pulse width of the Z-phase signal, i.e., N, as the reference.

By comparing FIGS. 11A and 11B, it can be seen that the position at which the count of the up/down counter 107 becomes zero during forward rotation is the same as during reverse rotation.

An example of the operation of the waveform measuring instrument 1 when starting from reverse rotation will be described with reference to FIG. 12A. The operation when starting from reverse rotation is in principle the same as when starting from forward rotation but differs in the following points. The Z-phase up/down counter 112 starts counting from zero and therefore becomes smaller than zero every time the reverse rotation zero position timing occurs. Therefore, the zero position determination circuit 114 outputs a set to M - 1 signal to the up/down counter 107 not only when the value of the Z-phase up/down counter 112 becomes zero, but also when the value of the Z-phase up/down counter 112 becomes a value smaller than zero. Similar to the operation during forward rotation, the value of the reverse rotation Z-phase up counter 115 and the value of the first hold memory 113 become N at the final reverse rotation zero position timing before the count period signal becomes LO. When the count period signal becomes LO, N is loaded from the first hold memory 113 into the Z-phase up/down counter 112.

FIG. 12B illustrates the rotation angle count of the up/down counter 107 when operations are performed as described above. In the case of starting with reverse rotation, when the Z-phase signal first becomes HI, the waveform measuring instrument 1 counts the number of A-phase and B-phase pulses during the period when the Z-phase signal is HI, i.e., the number of down signals. The next time the Z-phase signal becomes HI, the waveform measuring instrument 1 executes a countdown from N in the Z-phase up/down counter 112 and sets the rotation angle count of the up/down counter 107 to the maximum value, i.e., M - 1, at the timing when the Z-phase signal becomes LO. As illustrated in FIG. 12B, when starting with reverse rotation, the angle cannot be measured correctly the first time through the Z-phase because the value of N is not determined, but from the second time onwards, the value of N can be identified and the angle can be measured correctly.

With reference to FIG. 13, the operation of the waveform measuring instrument 1 when the rotation changes from forward to reverse while the count period signal is HI will be described.

In the above explanation, the value stored in the first hold memory 113 is the value of the Z-phase up/down counter 112 in the case in which the last zero position timing before the count period signal falls is the forward rotation zero position timing and is the value of the reverse rotation Z-phase up counter 115 in the case in which the last zero position timing is the reverse rotation zero position timing. Furthermore, the Z-phase up/down counter 112 loads the value stored in the first hold memory 113 after the count period signal falls.

When the rotation changes from forward to reverse, the Z-phase up/down counter 112 executes a countdown. The reverse rotation Z-phase up counter 115 starts counting up from the start of reverse rotation. Assume that the count of the reverse rotation Z-phase up counter 115 from the start of reverse rotation to the falling edge of the Z-phase signal is K. In a case in which the reverse rotation Z-phase up counter 115 stores K in the first hold memory 113, K is loaded into the Z-phase up/down counter 112. K is a value different from the count value N during the period in which the count period signal is HI. Therefore, when K is loaded into the Z-phase up/down counter 112, the waveform measuring instrument 1 cannot operate correctly. Even if the rotation direction changes from forward to reverse while the count period signal is HI, the waveform measuring instrument 1 can load N into the Z-phase up/down counter 112 by using the rotation direction detection circuit 117 and the second hold memory 116.

It is assumed that while the count period signal is HI, an operation in which forward or reverse rotation continues is being executed. In this case, as described above, the count (N) while the count period signal is HI is stored in the second hold memory 116.

The rotation direction detection circuit 117 holds whether the first zero position timing after the Z-phase signal rises is the forward rotation zero position timing or the reverse rotation zero position timing. The rotation direction detection circuit 117 compares the zero position timing that occurs during the period in which the count period signal is HI with the first zero position timing that is held. The rotation direction detection circuit 117 becomes 0 when the two compared timings match in terms of forward rotation zero position timing or reverse rotation zero position timing and becomes 1 when the two compared timings differ from each other. In the example of FIG. 13, the rotation direction detection circuit 117 holds the occurrence of the first forward rotation zero position timing and thus becomes 0 while forward rotation continues and 1 when the first reverse rotation zero position timing occurs after the rotation has changed to reverse rotation. The rotation direction detection circuit 117 holds 1 when the count period signal falls.

While the count period signal is HI, the rotation direction detection circuit 117 becomes 1 due to the change from forward rotation to reverse rotation. Therefore, the value held in the first hold memory 113, i.e., a value smaller than N, is not stored in the second hold memory 116. That is, the value of the second hold memory 116 remains N. The Z-phase up/down counter 112 can correctly load N by loading the value of the second hold memory 116 when the count period signal becomes LO.

With reference to FIG. 14, the operation of the waveform measuring instrument 1 when the rotation changes from reverse to forward while the count period signal is HI will be described.

The Z-phase up/down counter 112 executes a countdown during reverse rotation. It is assumed that the count of the Z-phase up/down counter 112 is L at the timing when the rotation changes from reverse to forward. The Z-phase up/down counter 112 starts counting up after the rotation is changed to forward rotation. In this state, the count of the Z-phase up/down counter 112 returns from L to N, so that the count of the Z-phase up/down counter 112 returns to N when the count period signal becomes LO. As a result, when the count period signal becomes LO, N is stored in the first hold memory 113 from the Z-phase up/down counter 112. In this case, when the count period signal becomes LO, the values of both the first hold memory 113 and the second hold memory 116 are N, and the waveform measuring instrument 1 can operate correctly even if a value is loaded from either one into the Z-phase up/down counter 112. However, in this case, since the output of the rotation direction detection circuit 117 is 1, the operating logic can be simplified by unifying the operation so as to load the value from the second hold memory 116 into the Z-phase up/down counter 112.

As described above, when the rotation changes from forward to reverse while the count period signal is HI, the timing at which the rotation angle count is set by loading the value of the second hold memory 116 is the same for the Z-phase signal, which is symmetrical between forward and reverse rotation. As a result, no error occurs in the zero position between forward and reverse rotation.

Furthermore, even if the rotation switches from forward to reverse and then back to forward during the period when the Z-phase signal is HI, or if the rotation switches from reverse to forward and then back to reverse, the count during the period when the count period signal is HI becomes N correctly. In this case, the rotation direction at the first zero position timing is the same as the rotation direction at the last zero position timing, so the rotation direction detection circuit 117 becomes 0. Even in this state, the count becomes N while the count period signal is HI.

In the case of multiple switches between forward and reverse rotation within the period in which the Z-phase signal is HI, if the rotation direction when the count period signal becomes HI is the same as the rotation direction when the count period signal becomes LO, the rotation direction detection circuit 117 will become 0, and if the directions are different, the rotation direction detection circuit 117 will become 1. The operation at this time as well is similar, and the count becomes N while the count period signal is HI.

FIGS. 15A and 15B illustrate an example of the results of measuring the rotation angle by the waveform measuring instrument 1 according to the present disclosure. As illustrated in FIG. 15A, in a case in which the rotation continues in the forward direction during measurement, the rotation angle is set to zero at the first zero position detection timing during the period in which the count period signal becomes HI. As a result, the timing at which the rotation angle is set to zero becomes constant regardless of the pulse width of the Z-phase signal. Also, as illustrated in FIG. 15B, even if the rotation changes from forward to reverse during measurement, the rotation angle is set to zero at the timing of the first zero position detection during forward rotation and is set to zero at the timing when the count of the Z-phase up/down counter 112 reaches 0 during reverse rotation. As a result, no error occurs in the zero position between forward and reverse rotation.

In the operation example described above, the waveform measuring instrument 1 sets the rotation angle count to zero at the timing of the first zero position detection during forward rotation and sets the rotation angle count to M - 1 during reverse rotation when the count of the Z-phase up/down counter 112 counts down from N to zero. The waveform measuring instrument 1 may set the rotation angle count to zero at any timing during the period in which the count period signal is HI. Specifically, during the period when the count period signal is HI, the waveform measuring instrument 1 may set the rotation angle count to zero when the zero position detection timing occurs P times during forward rotation and may set the rotation angle count to the maximum value, i.e., M - 1, when the zero position detection timing occurs (N - P + 1) times during reverse rotation. That is, a predetermined number may be set corresponding to each of forward and reverse rotation, and the rotation angle count may be set to zero or a maximum value when the zero position detection timing occurs a predetermined number of times. In this operation example, the condition under which the zero position detection timing occurs coincides with one of the four conditions under which the count signal is generated. Therefore, the number of times that the zero position detection timing occurs is 1/4 of the number of count signals. The Z-phase up/down counter 112 and the reverse rotation Z-phase up counter 115 are considered to be counting a number four times the number of occurrences of the zero position detection timing. The Z-phase up/down counter 112 and the reverse rotation Z-phase up counter 115 may count the number of times that the zero position detection timing occurs. In the above example, P is a predetermined number corresponding to forward rotation. N - P + 1 is the predetermined number corresponding to the reversal. Therefore, the sum of the predetermined number corresponding to forward rotation and the predetermined number corresponding to reverse rotation is the number of count signals in the HI period of the count period signal plus 1, i.e., N + 1. By setting the rotation angle count to zero when the zero position detection timing occurs a predetermined number of times corresponding to forward rotation during forward rotation and setting the rotation angle count to the maximum value, i.e., M - 1, when the zero position detection timing occurs a predetermined number of times corresponding to reverse rotation during reverse rotation, it becomes possible to set the rotation angle to zero during forward rotation and to M - 1 during reverse rotation at any timing during the HI period of the count period signal. This results in increased freedom of movement.

The embodiment described above corresponds to the case in which the predetermined number corresponding to the forward rotation, i.e., P, is 1. In this case, the predetermined number corresponding to reverse rotation becomes N. That is, the predetermined number corresponding to reverse rotation is equal to the number of count signals in the HI period of the count period signal. In this way, the determination circuit can be constructed simply.

In the operation examples described above, the period during which the count period signal is HI, i.e., the number of count signals during the HI period of the count period signal, is initially counted by the Z-phase up/down counter 112 and held in the first hold memory 113, but this number may also be stored in advance in the first hold memory 113 as a known value without being counted by the waveform measuring instrument 1. In the case in which the waveform measuring instrument 1 includes the second hold memory 116, the number of count signals in the HI period of the count period signal may also be stored in the second hold memory 116. By the number of count signals in the HI period of the count period signal being stored in advance, the circuit configuration of the waveform measuring instrument 1 can be simplified. By having the waveform measuring instrument 1 count the count signal during the HI period of the count period signal, it becomes possible to address the case in which a Z-phase signal having an unknown pulse width is inputted.

### <Example of measurement procedure>

Each component of the waveform measuring instrument 1 may execute a measurement method including the example procedures of the flowchart illustrated in FIG. 16. The measurement method may be realized as a measurement program executed by a processor provided in each component of the waveform measuring instrument 1. The measurement program may be stored in a non-transitory computer readable medium.

The waveform measuring instrument 1 acquires a count signal from the encoder 10 (step S1). The waveform measuring instrument 1 determines whether the Z-phase signal is HI (step S2). In a case in which the Z-phase signal is not HI (step S2: NO), i.e., in a case in which the Z-phase signal is LO, the waveform measuring instrument 1 proceeds to the procedure of step S8.

In a case in which the Z-phase signal is HI (step S2: YES), the waveform measuring instrument 1 determines whether the zero position signal has occurred even once after the Z-phase signal became HI (step S3). In a case in which the zero position signal has not occurred even once (step S3: NO), the waveform measuring instrument 1 proceeds to the procedure of step S7. In a case in which the zero position signal has occurred even once (step S3: YES), the waveform measuring instrument 1 sets the count period signal to HI, increments the count of the Z-phase up/down counter 112 when an up signal is acquired, and decrements the count of the Z-phase up/down counter 112 while incrementing the count of the reverse rotation Z-phase up counter 115 when a down signal is acquired (step S4).

The waveform measuring instrument 1 determines whether the count of the Z-phase up/down counter 112 has reached a predetermined value (step S5). The predetermined value is a value that is set for forward rotation and a value that is set for reverse rotation. In a case in which the count of the Z-phase up/down counter 112 has not reached the predetermined number (step S5: NO), the waveform measuring instrument 1 proceeds to step S7.

In a case in which the count of the Z-phase up/down counter 112 has reached the predetermined number (step S5: YES), the waveform measuring instrument 1 sets the rotation angle count to zero with a forward rotation zero position signal and sets the rotation angle count to the maximum value, i.e., M - 1, with a reverse rotation zero position signal (step S6). After executing the procedure of step S6, the waveform measuring instrument 1 ends the procedure of the flowchart in FIG. 16. After executing the procedure of step S6, the waveform measuring instrument 1 may return to the procedure of step S1.

In a case in which the zero position signal has not occurred even once (step S3: NO), or the count of the Z-phase up/down counter 112 has not reached the predetermined value (step S5: NO), the waveform measuring instrument 1 does not set the rotation angle count to zero, but increases the rotation angle count during forward rotation and decreases the rotation angle count during reverse rotation (step S7). After executing the procedure of step S7, the waveform measuring instrument 1 ends the procedure of the flowchart in FIG. 16. After executing the procedure of step S6, the waveform measuring instrument 1 may return to the procedure of step S1.

In a case in which the Z-phase signal is not HI (step S2: NO), the waveform measuring instrument 1 determines whether the Z-phase signal has changed from HI to LO (step S8). In a case in which the Z-phase signal has not changed from HI to LO (step S8: NO), the waveform measuring instrument 1 proceeds to the procedure of step S7 and increases or decreases the rotation angle count.

In a case in which the Z-phase signal changes from HI to LO (step S8: YES), the waveform measuring instrument 1 determines whether the rotation direction detection circuit 117 is 0 (step S9). In a case in which the rotation direction detection circuit 117 is 0 (step S9: YES), the waveform measuring instrument 1 loads the value of the first hold memory 113 into the Z-phase up/down counter 112 (step S10), proceeds to the procedure of step S7, and increases or decreases the rotation angle count. In a case in which the rotation direction detection circuit 117 is not 0 (step S9: NO), i.e., the rotation direction detection circuit 117 is 1, the waveform measuring instrument 1 loads the value of the second hold memory 116 into the Z-phase up/down counter 112 (step S11), proceeds to the procedure of step S7, and increases or decreases the rotation angle count.

### (Summary)

As described above, the waveform measuring instrument 1 according to the present disclosure can make the timing for setting the rotation angle to zero during forward rotation and reverse rotation consistent, regardless of the length of the pulse width of the Z-phase signal. As a result, the zero position of the rotation angle is determined with high accuracy regardless of the rotation direction.

### Other Embodiments

In the above embodiment, a rotary encoder is used as the encoder 10. The encoder 10 may be a linear encoder. In this case, a count corresponding to linear displacement is measured instead of a count corresponding to the rotation angle.

The conditions for outputting an up signal or down signal are not limited to the conditions illustrated in Tables 1 and 2. For example, an up signal or down signal may be outputted only at the timing when one of the H edge or L edge of the A-phase signal occurs, or when one of the H edge or L edge of the B-phase signal occurs. In this case, the measurement resolution of the rotation angle or displacement becomes 1/4. Also, an up signal or a down signal may be outputted only at the timings when the H edge and L edge of the A-phase signal occur, or at the timings when the H edge and L edge of the B-phase signal occur. In this case, the measurement resolution of the rotation angle or displacement becomes 1/2.

Although an embodiment of the present disclosure has been described above with reference to the drawings, the specific configuration is not limited to this embodiment, and various modifications that do not deviate from the spirit of the present disclosure are included in the scope thereof.

## Claims

1. A waveform measuring instrument (1) for converting a count signal outputted by an encoder (10) into a rotation angle, comprising:
a zero position determination circuit (114) configured to generate a set signal based on a Z-phase signal having a pulse width over a period including a plurality of zero position detection timings based on the count signal; and
a counter (107) configured to increase or decrease the rotation angle based on the count signal, and set a count to zero when the rotation angle is increased and to a maximum value when the rotation angle is decreased, based on the set signal, wherein
the zero position determination circuit (114) is configured to output the set signal when a predetermined number of the zero position detection timings corresponding to forward rotation or reverse rotation occurs during a HI period of the Z-phase signal.

2. The waveform measuring instrument (1) according to claim 1, wherein a sum of a predetermined number corresponding to the forward rotation and a predetermined number corresponding to the reverse rotation is a number obtained by adding 1 to the number of the zero position detection timings during the HI period of the Z-phase signal.

3. The waveform measuring instrument (1) according to claim 2, wherein the predetermined number corresponding to the reverse rotation is equal to the number of the zero position detection timings during the HI period of the Z-phase signal.

4. The waveform measuring instrument (1) according to any one of claims 1 to 3, further comprising a Z-phase counter (112) configured to count the count signal during the HI period of the Z-phase signal.

5. A measurement method for converting a count signal outputted by an encoder (10) into a rotation angle, comprising:
generating, based on a Z-phase signal having a pulse width over a period including a plurality of zero position detection timings based on the count signal, a set signal when a predetermined number of the zero position detection timings corresponding to forward rotation or reverse rotation occurs during a HI period of the Z-phase signal;
increasing or decreasing the rotation angle based on the count signal; and
setting a count to zero when the rotation angle is increased and to a maximum value when the rotation angle is decreased, based on the set signal.

6. The measurement method according to claim 5, wherein a sum of a predetermined number corresponding to the forward rotation and a predetermined number corresponding to the reverse rotation is a number obtained by adding 1 to the number of the zero position detection timings during the HI period of the Z-phase signal.

7. The measurement method according to claim 6, wherein the predetermined number corresponding to the reverse rotation is equal to the number of the zero position detection timings during the HI period of the Z-phase signal.

8. The measurement method according to any one of claims 5 to 7, further comprising counting the count signal during the HI period of the Z-phase signal.

9. A measurement program for converting a count signal outputted by an encoder (10) into a rotation angle, the measurement program being configured to cause a processor to execute processing comprising:
generating, based on a Z-phase signal having a pulse width over a period including a plurality of zero position detection timings based on the count signal, a set signal when a predetermined number of the zero position detection timings corresponding to forward rotation or reverse rotation occurs during a HI period of the Z-phase signal;
increasing or decreasing the rotation angle based on the count signal; and
setting a count to zero when the rotation angle is increased and to a maximum value when the rotation angle is decreased, based on the set signal.

10. The measurement program according to claim 9, wherein a sum of a predetermined number corresponding to the forward rotation and a predetermined number corresponding to the reverse rotation is a number obtained by adding 1 to the number of the zero position detection timings during the HI period of the Z-phase signal.

11. The measurement program according to claim 10, wherein the predetermined number corresponding to the reverse rotation is equal to the number of the zero position detection timings during the HI period of the Z-phase signal.

12. The measurement program according to any one of claims 9 to 11, wherein the processing further comprises counting the count signal during the HI period of the Z-phase signal.
